Europäisches Patentamt

European Patent Office

Office européen des brevets

(11) Publication number: **0 485 046 A1**

# EUROPEAN PATENT APPLICATION

(21) Application number: **91302275.2**

(22) Date of filing: **18.03.91**

(51) Int. Cl.5: **B60J 7/057**, E05F 15/00

(30) Priority: **03.11.90 GB 9023955**

(43) Date of publication of application:
**13.05.92 Bulletin 92/20**

(84) Designated Contracting States:
**DE ES FR GB IT SE**

(71) Applicant: **PEKTRON LIMITED**
**Alfreton Road**
Breadsall, Derby DE3 4AP(GB)

(72) Inventor: **Yardley, Russell John**
**21, Maxwell Street**
**Breaston Derbyshire DE7 3AH(GB)**

(74) Representative: **Drever, Ronald Fergus et al**
**Swindell & Pearson 48, Friar Gate**
**Derby DE1 1GY(GB)**

(54) **Vehicle sunroof control.**

(57) A sunroof assembly 10 for a motor vehicle has a closure member slidable across an opening between an open and closed position. Towards the leading edge of the sunroof opening and below the level of the closure member there are provided in line an infra-red light source 30 and an infra-red detector 32. With no obstruction in the opening the light pulses are detected by the latter. However obstruction in the path of the light pulses alters the output of a comparator 34 causing a micro controller 15 to stop further automatic movement of the roof closure member, manual further movement only being possible.

This invention relates to apparatus for controlled closure of an opening and is particularly concerned with controlled closure of a sunroof opening in a motor vehicle.

Where an automatic closure arrangement is provided in a motor vehicle for a sunroof opening, if the operator of the sunroof is required to continuously operate an appropriate switch in the vehicle during the time the closure moves from an open to a closed position, then the operator has control over the movement of the closure in the event that the sunroof opening is obstructed, for example by a hand or any other part of another person in the vehicle. However, where a sunroof closure is to be operated by way of a switch which requires a single press by the operator, the obstruction may not be noticed by the operator and the automatic movement of the closure against the band or whatever will, at the least, cause some discomfort. Automatic detection of the obstruction by way of a motor stall condition has the disadvantage that the motor is initially stopped by jamming against the obstruction, thereby causing possible pain or discomfort before the closure motor is switched off.

According to the present invention there is provided apparatus for controlled closure of an opening, such as a sunroof opening in a motor vehicle, the apparatus comprising means defining an opening, closure means for the opening, and means for effecting movement of the closure means relative to the opening, characterised by means for detecting an obstruction in the path of movement of the closure means and automatically controlling the movement effecting means.

Preferably the detecting means comprises a signal source to one side of the opening and a signal receiver to the other side, whereby an obstruction in the path of the signal can be detected. The source may be an infra-red light source and the receiver is an infra-red receiver, which the latter may be in the form of an opto transistor.

A transistor may be in circuit with the source and is arranged to be pulsed on by a low duty cycle pulse train applied to its base. Circuitry connecting the receiver with a comparator may provide the latter normally with an output having a wave form substantially identical to that applied to the base of the transistor, a change in wave form initiating control of the movement effecting means.

Preferably also the detecting means is energised when the closure means is moving from an open to a closed position and, on detecting an obstruction, stops further movement of the closure means. The detecting means, on detecting an obstruction, is arranged to cause the closure means to move back to the open position.

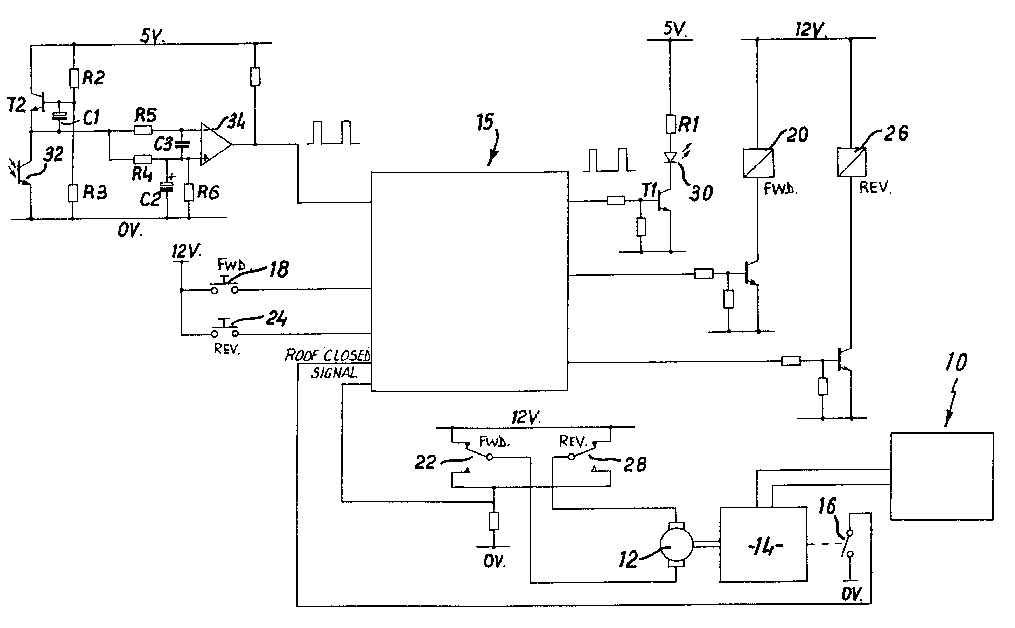

An embodiment of the present invention will now be described by way of example only with reference to the single figure of the accompanying drawing which shows the circuitry for a sunroof closure control.

Referring to the drawing, there is shown diagrammatically a sunroof assembly 10 for a motor vehicle, the assembly comprising a closure member which is slidable across an opening in the roof of the vehicle between an open and closed position. Movement of the closure member is effected by way of an electric motor 12 through a gearbox 14, and controlled by way of a micro controller 15. When the closure member moves from the open to the fully closed position, the latter position is sensed by a micro switch 16 which is effective to stop the motor 12. Suitable circuitry of the micro controller 15 is provided to drive the motor 12, there being provided in the vehicle a switch 18 to drive the motor in one direction, effecting movement of the closure member from the open to the closed position by way of an energised relay 20 with contact 22. A further switch 24 in the vehicle, when operated, drives the motor 12 in the opposite direction to effect reverse movement of the closure member by way of an energised relay 26 with contact 28.

Towards the leading edge of the sunroof opening and below the level of the closure member, there are provided, in line, an infra-red light source 30 and an infra-red detector in the form of an opto transistor 32. A transistor T1 in circuit with the source 30 is arranged to be pulsed on by a low duty cycle pulse train applied to its base from the micro controller 15. A resistor R1 is connected in series with the source 30 to limit the collector current of the transistor T1. Each pulse of collector current causes a pulse of infra-red light to be emitted across the leading edge of the sunroof opening. Assuming no obstruction between the source 30 and the opto transistor 32, the light pulses are detected by the latter.

In circuit with the opto transistor 32 is a transistor T2, the base of which is connected to one side of a capacitor C1 and between series resistors R2 and R3. The other side of the capacitor C1 is connected to the emitter of the transistor T2 and the collector of the opto transistor 32. The circuit formed by the transistor T2, the capacitor C1 and the resistors R2 and R3 attempts to produce a constant voltage at the collector of the opto transistor 32 irrespective of the ambient light, for example daylight, which is also received by the opto transistor 32. However, the capacitor C1 effectively provides a high pass filter action causing the voltage at the collector of the opto transistor 32 to pulse a fraction of a volt lower than its fixed dc average level, on receipt of an infra-red pulse. The collector of the opto transistor 32 is connected between resistors R4 and R5. Resistor R5 is connected to the negative input of a comparator 34 while resistor R4 is connected to the positive input of the comparator 34. A capacitor C3 is connected at one side across the comparator inputs. A resistor R6 is connected between the positive comparator input and earth to form a voltage divider with resistor R4. Resistor R6 has a much greater value than resistor R4, thus providing a slightly lower voltage to the positive comparator input than the collector voltage of the opto-transistor 32. The capacitor C2 shunts the resistor R6 to provide a low pass filter which filters the voltage pulses caused by the infra-red beam to produce a smooth dc voltage to the comparator positive input.

The comparator 34 compares the smoothed voltage at its positive input with a slightly higher dc average voltage modulated with low going pulses provided through resistor R5 to its negative input. The output of the comparator 34 thus has a virtually identical wave form as that applied to the base of transistor T1 assuming the infrared beam is not broken.

Failure to produce similar pulses out of the comparator 34 as those inputted to the base of transistor T1 implies that either the infra-red source and receiver circuit has failed, or an object is blocking the beam. In the event of such failure the electronic circuitry of the micro controller 15 is adapted to render inoperative the automatic movement of the closure member so that further movement of the closure member can only be manually. If desired, the circuitry may be adapted so that movement of the closure member is automatically reversed in the event of such failure, i.e. the closure member is moved to its open position.

Various modifications may be made without departing from the invention. For example, further arrangements of infra-red sources and detectors may be provided, although it is only towards the leading edge of the sunroof opening that any jamming of the closure member against an obstruction would take place. As an alternative to an infra-red arrangement, any other suitable form of signal transmission may be utilised. Further the electronic circuitry provided for closure control may differ from that described and shown.

## Claims

1. Apparatus for controlled closure of an opening, such as a sunroof opening in a motor vehicle, the apparatus comprising means defining an opening, closure means for the opening, and means for effecting movement of the closure means relative to the opening, characterised by means (30-34) for detecting an obstruction in the path of movement of the closure means and automatically controlling the movement effecting means (12, 14).

2. Apparatus according to Claim 1, characterised in that the detecting means comprises a signal source (30) to one side of the opening and a signal receiver (32) to the other side, whereby an obstruction in the path of the signal can be detected.

3. Apparatus according to Claim 2, characterised in that the source (30) is an infra-red light source and the receiver (32) is an infrared receiver.

4. Apparatus according to Claim 3, characterised in that the receiver (32) is in the form of an opto transistor.

5. Apparatus according to any of Claims 2 to 4, characterised in that a transistor (T1) is in circuit with the source (30) and is arranged to be pulsed on by a low duty cycle pulse train applied to its base.

6. Apparatus according to Claim 5, characterised in that circuitry connecting the receiver (32) with a comparator (34) provides the latter normally with an output having a wave form substantially identical to that applied to the base of the transistor (T1), a change in wave form initiating control of the movement effecting means (12, 14).

7. Apparatus according to any of the preceding Claims, characterised in that the detecting means (30-34) is energised when the closure means is moving from an open to a closed position and, on detecting an obstruction, stops further movement of the closure means.

8. Apparatus according to any of Claims 1 to 6, characterised in that the detecting means (30-34) is energised when the closure means is moving from an open to a closed position and, on detecting an obstruction, is arranged to cause the closure means to move back to the open position.

9. Apparatus according to any of the preceding Claims, characterised in that the movement effecting means includes an electric motor (12) and associated gearbox (14).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | PATENT ABSTRACTS OF JAPAN vol. 9, no. 168 (M-396)(1891) 13 July 1985 & JP-A-60 042 126 ( AISHIN SEIKI K.K ) 6 March 1985 | 1,2,7 | B60J7/057 E05F15/00 |
| Y | * abstract * | 3,4,8,9 | |
| Y | DE-A-2 821 681 (MOTO METER AG) * page 4, line 19 - page 5, line 1 * | 3,4 | |
| A | * page 6, line 1 - page 7, line 13 * * page 8, line 8 - page 10, line 9 * * page 12, line 10 - page 13, line 6; figures 1-3 * | 5,6 | |
| Y | PATENT ABSTRACTS OF JAPAN vol. 10, no. 37 (M-453)(2094) 14 February 1986 & JP-A-60 189 627 ( NIPPON DENSO K.K ) 27 September 1985 * abstract * | 8 | |
| Y | US-A-4 561 691 (KAWAI ET.AL) * column 5, line 22 - column 6, line 5; figures 2,7,8 * | 9 | TECHNICAL FIELDS SEARCHED (Int. Cl.5 ) |
| A | DE-A-3 527 405 (BOSCH) * the whole document * | 1,8 | B60J E05F |
| A | GB-A-2 157 458 (PORSCHE) * claims 1,10,11; figures 3,5 * | 4 | |
| A | DE-A-3 247 189 (VIRTANEN ET.AL) * page 5, line 12 - line 22 * * page 7, line 10 - page 8, line 2; claims 1,5; figures 2,3 * | 3,4 | |

The present search report has been drawn up for all claims

| Place of search | Date of completion of the search | Examiner |
|---|---|---|
| THE HAGUE | 12 FEBRUARY 1992 | GEYER J.L. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)